# EUROPEAN PATENT SPECIFICATION

(11) **EP 3 733 768 B1**
(45) Date of publication and mention of the grant of the patent: **02.11.2022**
(21) Application number: 18893722.1
(22) Date of filing: 27.12.2018
(51) Int. Cl.: C08L 67/02, C08J 5/18, C08G 63/16, C08K 5/00

(54) **POLYESTER RESIN COMPOSITION FOR CALENDERING, AND METHOD FOR PRODUCING POLYESTER FILM**
POLYESTERHARZZUSAMMENSETZUNG ZUM KALANDRIEREN UND VERFAHREN ZUR HERSTELLUNG EINER POLYESTERFOLIE
COMPOSITION DE RÉSINE DE POLYESTER POUR CALANDRAGE, ET PROCÉDÉ DE PRODUCTION DE FILM DE POLYESTER

(30) Priority: 29.12.2017 KR 20170183577
(43) Date of publication of application: 04.11.2020
(73) Proprietor: SKC Co., Ltd., Suwon-si, Gyeonggi-do 16336 (KR)
(72) Inventor: NOH, Ilho, Yongin-si, Gyeonggi-do 16844 (KR); OH, Mi Ok, Suwon-si, Gyeonggi-do 16340 (KR); LEE, Deuk-Young, Suwon-si, Gyeonggi-do 16329 (KR); CHOI, Sang Hun, Seoul 05849 (KR)
(74) Representative: Dehns
(86) International application number: PCT/KR2018/016751
(87) International publication number: WO 2019/132540

(56) References cited:
- EP-A1- 1 392 764
- EP-A2- 0 947 543
- EP-B1- 1 392 764
- JP-A- 2005 008 771
- JP-A- 2005 008 771
- JP-A- 2014 196 513
- KR-A- 20030 080 041
- KR-A- 20100 079 504
- KR-A- 20110 077 688
- US-A1- 2005 113 556

## Description

### Technical Field

The following embodiments relate to a polyester resin composition applied to a calendering process and a process for preparing a polyester film from the same. More specifically, the embodiments relate to a polyester resin composition blended with an additive for improving the calendering processability and a process for preparing a polyester film from the same that can be used as an environmentally friendly material.

### Background Art

A calendering process is a process for molding a film, a sheet, and the like using a calender-that is, a rolling machine in which a plurality of heating rolls are arranged. The calendering process has been mainly adopted for preparing films, sheets, and the like since it is faster in production speed and convenient to process them to a thinner thickness than the extrusion process.

Polyvinyl chloride (PVC) resins, which have been commonly used for a calendering process in the past, are excellent in processability, but they are neither readily recyclable nor environmentally friendly when they are disposed of. In addition, although polypropylene (PP) resins are excellent in calendering processability, they are not environmentally friendly and have a problem in printing and lamination without corona and primer treatment.

Meanwhile, polyethylene terephthalate (PET) resins, which are representative polyester resins, have excellent physical properties for the price, but they are poor in calendering processability. Thus, it is known to prepare a polyester film from a glycol-modified polyethylene terephthalate (PETG) resin so as to impart properties suitable for application to a calendering process (see Korean Laid-open Patent Publication No. 2014-0109506). JP2005008771 discloses a polyester resin composition for calender molding which contains a preset amount of amorphous or low crystalline polyester resin, organic layered silicate, fatty-acid and its metal salt. EP1392764 discloses calendered polyester films or sheets having a haze value of less than 5%.

### Detailed Description of the Invention

### Technical Problem

In order for a polyester resin to be applied to a calendering process, it is known to blend an additive to prevent the polyester resin from sticking to the metal rolls and to enhance the flowability at high temperatures, in addition to further introducing thereto a glycol component such as 1,4-cyclohexanedimethanol.

However, although such an additive produces an effect of increasing the processability during the calendering process, it remains upon completion of the calendering process, thereby deteriorating the physical properties of the final film or sheet.

As a result of the research conducted by the present inventors, it has been discovered that if the thermal properties of an additive for increasing the calendering processability are adjusted, it is possible to enhance the calendering processability by the additive and to suppress the deterioration of the physical properties of the final film.

Accordingly, the following embodiments aim to provide a polyester resin composition blended with an additive that enhances the processability during the calendering process and does not deteriorate the physical properties of the final product.

In addition, the following embodiments aim to provide a process for preparing a polyester film that is environmentally friendly and has excellent physical properties at a relatively low cost from the polyester resin composition.

### Solution to the Problem

According to an embodiment to accomplish the above object, there is provided a polyester resin composition for calendering, which comprises a polyester resin obtained by polymerization of a dicarboxylic acid component and a diol component; and 0.1 part by weight to less than 10 parts by weight of a lubricant based on 100 parts by weight of the polyester resin, wherein the lubricant has a weight reduction rate of 1 to 20% relative to its initial weight when maintained at 150°C for 100 minutes in an isothermal TGA method and a weight reduction rate of 20 to 65% relative to its initial weight when maintained at 200°C for 100 minutes in an isothermal TGA method and a weight reduction rate of 30 to 70% relative to its initial weight when heated at a rate of 20°C/min from 30°C to 350°C in a temperature-elevation type TGA method. The lubricant comprises a combination of a first lubricant and a second lubricant. The first lubricant has a weight reduction rate of 1 to 12% relative to its initial weight when maintained at 150°C for 100 minutes in an isothermal TGA method, and the second lubricant has a weight reduction rate of 10 to 25% relative to its initial weight when maintained at 150°C for 100 minutes in an isothermal TGA method.

According to another embodiment, there is provided a process for preparing a polyester film, which comprises (1) adding a lubricant to a polyester resin to prepare a polyester resin composition; (2) kneading the composition to gelate it; (3) calendering the gelated composition to form a film, wherein the polyester resin is obtained by polymerization of a dicarboxylic acid component and a diol component, the lubricant is employed in an amount of 0.1 part by weight to less than 10 parts by weight based on 100 parts by weight of the polyester resin, and the lubricant has a weight reduction rate of 1 to 20% relative to its initial weight when maintained at 150°C for 100 minutes in an isothermal TGA method and a weight reduction rate of 20 to 65% relative to its initial weight when maintained at 200°C for 100 minutes in an isothermal TGA method and a weight reduction rate of 30 to 70% relative to its initial weight when heated at a rate of 20°C/min from 30°C to 350°C in a temperature-elevation type TGA method. The lubricant comprises a combination of a first lubricant and a second lubricant. The first lubricant has a weight reduction rate of 1 to 12% relative to its initial weight when maintained at 150°C for 100 minutes in an isothermal TGA method, and the second lubricant has a weight reduction rate of 10 to 25% relative to its initial weight when maintained at 150°C for 100 minutes in an isothermal TGA method.

### Advantageous Effects of the Invention

Since the polyester resin composition for calendering according to the embodiment comprises a lubricant having controlled thermal properties, it is possible to enhance the calendering processability and to suppress the deterioration of the physical properties of the final film caused by residual components.

In particular, the lubricant has a specific range of weight reduction rates with respect to the temperature conditions applied to the calendering process. Thus, the composition has proper adhesion to, and releasability from, the metal rolls while the calendering process is in progress, as well as plasticity and high-temperature flowability, and the lubricant does not remain unnecessarily upon the calendering process, whereby it does not impair the physical properties such as thermal resistance and surface strength of the polyester film.

Accordingly, the polyester resin composition according to the embodiment may be applied to a calendering process to provide a polyester film having excellent physical properties at a relatively low cost.

In addition, the polyester film thus prepared is environmentally friendly and has excellent thermal resistance and surface strength, so that it can be used as various environmentally friendly materials such as a decorative sheet.

### Best Mode for Carrying out the Invention

The following embodiments provide a polyester resin composition for calendering and a process for preparing a polyester film from the same.

The following embodiments can be modified into various forms as long as the gist of the invention is not altered.

Throughout the description of the embodiments, the term "comprise" means that other elements may be included unless otherwise indicated.

Throughout the present specification, the terms first, second, and the like are used to describe various components. But the components should not be limited by the terms. The terms are used only for the purpose of distinguishing one component from another.

### Polyester resin composition for calendering

The polyester resin composition for calendering according to an embodiment comprises a polyester resin and a lubricant as defined above.

The polyester resin composition for calendering according to an embodiment comprises a lubricant, which is eluted (or decomposed) at the process temperature while the resin passes through the heated rolls, thereby improving the processability.

Specifically, the lubricant may improve the melt flowability of the resin inside the resin and may prevent adhesion to the device such as rolls used in the process outside the resin.

Accordingly, the lubricant serves to impart plasticity and high-temperature flowability, along with proper adhesion to, and releasability from, the metal rolls, to the polyester resin composition in the calendering process.

In such event, if the amount of the lubricant eluted at the processing temperature is too small, the molding process is not smoothly carried out due to adhesion, and the resin is to remain on the rolls for a long period of time, resulting in a problem of thermal degradation.

On the other hand, if the amount of the lubricant eluted at the processing temperature is too large, the lubricant is consumed before the entire process is completed, whereby the lubricant is insufficient at the final stage of the process, resulting in breakage due to a decrease in releasability from the roll; and bubbles are generated due to excessive elution of the lubricant in the temperature elevation section, resulting in a poor appearance of the product surface.

In general, in the calendering process, chips are gelated, which is then fed to the processing rolls at a temperature above the glass transition temperature. Thereafter, it is subjected to temperature elevation and calendering process, followed by quenching thereof at room temperature and treatment with an embossing roll depending on the applications.

In the calendering process, the lubricant should evenly function from the gelation to the final stage. To this end, it is necessary to adjust the amount of elution (or decomposition) of the lubricant in each section according to the process temperature.

That is, in the calendering process, it is possible to significantly enhance the effectiveness of the lubricant by adjusting the thermal properties of the lubricant with respect to temperature, rather than the type and content of the lubricant.

The lubricant has a specific range of weight reduction rates depending on the temperature conditions.

The lubricant has a weight reduction rate of 1 to 20% relative to its initial weight when maintained at 150°C for 100 minutes in an isothermal TGA method. Specifically, the lubricant may have a weight reduction rate of 2 to 15%, or 2 to 10%, relative to its initial weight when maintained at 150°C for 100 minutes. Within the above preferred range, it may be advantageous for enhancing the resin flowability without melt adhesion to the processing roll surface.

The lubricant has a weight reduction rate of 20 to 65% relative to its initial weight when maintained at 200°C for 100 minutes in an isothermal TGA method. Specifically, the lubricant may have a weight reduction rate of 25 to 65%, or 35 to 65%, relative to its initial weight when maintained at 200°C for 100 minutes. Within the above preferred range, it may be advantageous for the reduction in friction between the sheet and the roll and the releasability therefrom without carbonization on the processing roll surface.

The lubricant has a weight reduction rate of 30 to 70% relative to its initial weight when heated at a rate of 20°C/min from 30°C to 350°C in a temperature-elevation type TGA method. Specifically, the lubricant may have a weight reduction rate of 35 to 65%, or 40 to 65%, relative to its initial weight when heated at a rate of 20°C/min from 30°C to 350°C. Within the range of weight reduction rate, it may be advantageous for sheet releasability and prevention of bubble generation.

As an example, the lubricant may have a weight reduction rate of 30 to 70%, 35 to 65%, or 40 to 65%, relative to its initial weight when heated at a rate of 20°C/min from 30°C to 300°C.

The type of lubricant is not particularly limited as long as the above thermal properties are satisfied.

Specifically, any lubricant may be used regardless of its chemical structure and type as long as it satisfies a weight reduction rate of 1 to 20% under the conditions of 150°C and 100 minutes in an isothermal TGA method and a weight reduction rate of 20 to 65% under the conditions of 200°C and 100 minutes in an isothermal TGA analysis and a weight reduction rate of 30 to 70% when heated from 30°C to 350°C at a rate of 20°C/min in a temperature-elevation type TGA analysis.

The content of the lubricant is 0.1 part by weight to less than 10 parts by weight based on 100 parts by weight of the polyester resin.

Specifically, the content of the lubricant may be 0.1 to 5 parts by weight, 1 to 5 parts by weight, 0.1 to 3 parts by weight, 0.1 to 2 parts by weight, 3 to 5 parts by weight, or 5 to 10 parts by weight, based on 100 parts by weight of the polyester resin, but it is not limited thereto.

If the content of the lubricant is within the above range, it is possible to prevent an excessive amount of the lubricant from impairing the physical properties while the calendering processability is enhanced to the maximum.

As still another example, in the case where two or more types of lubricants are used in combination, it may be more advantageous for satisfying both the flowability inside the resin and the releasability outside the resin.

The lubricant comprises a combination of a first lubricant and a second lubricant.

In such event, the weight ratio of the first lubricant and the second lubricant may range from 1:2 to 2:1. More specifically, the weight ratio of the first lubricant and the second lubricant may range from 1:1.6 to 1.8:1.

The first lubricant and the second lubricant have different thermal properties.

The first lubricant has a weight reduction rate of 1 to 12% relative to its initial weight when maintained at 150°C for 100 minutes in an isothermal method, and the second lubricant has a weight reduction rate of 10 to 25% relative to its initial weight when maintained at 150°C for 100 minutes in an isothermal TGA method.

As another example, the first lubricant may have a weight reduction rate of 20 to 45% relative to its initial weight when maintained at 200°C for 100 minutes, and the second lubricant may have a weight reduction rate of 40 to 80% relative to its initial weight when maintained at 200°C for 100 minutes.

The types of the first lubricant and the second lubricant are not particularly limited as long as the combination thereof satisfies the above thermal properties. In addition, the first lubricant may be in the form of a combination of two or more lubricants as long as the above thermal properties are satisfied. Likewise, the second lubricant may be in the form of a combination of two or more lubricants as long as the above thermal properties are satisfied.

In addition, the first lubricant and the second lubricant may function differently in the calendering process. Although their functions are not particularly limited, for example, the first lubricant may enhance the flowability of the resin composition in the calendering process, and the second lubricant may enhance the releasability from the metal rolls.

The polyester resin is obtained by polymerization of a dicarboxylic acid component and a diol component.

That is, the polyester resin comprises a dicarboxylic acid component and a diol component as monomers.

Specifically, since the polyester resin is obtained by polymerization of a dicarboxylic acid component and a diol component, it may have repeat units derived from them.

The dicarboxylic acid component may comprise terephthalic acid (TPA), isophthalic acid (IPA), naphthalenedicarboxylic acid (NDC), cyclohexanedicarboxylic acid (CHDA), succinic acid, glutaric acid, orthophthalic acid, adipic acid, azelaic acid, sebacic acid, decanedicarboxylic acid, 2,5-furandicarboxylic acid, 2,5-thiopendicarboxylic acid, 2,7-naphthalenedicarboxylic acid, 4,4'-bibenzoic acid, a derivative thereof, or a combination thereof.

Specifically, the dicarboxylic acid component may comprise terephthalic acid, isophthalic acid, naphthalenedicarboxylic acid, cyclohexanedicarboxylic acid, or a combination thereof, but it is not limited thereto. More specifically, the dicarboxylic acid component may comprise terephthalic acid and/or isophthalic acid, but it is not limited thereto.

That is, the diol component may comprise a linear or branched aliphatic diol, an alicyclic diol, an aromatic diol, and the like.

For example, the linear or branched aliphatic diol may comprise ethylene glycol (EG), diethylene glycol (DEG), neopentyl glycol, 1,3-propanediol, 1,2-octanediol, 1,3-octanediol, 2,3-butanediol, 1,3-butanediol, 1,4-butanediol, 1,5-pentanediol, 2-butyl-2-ethyl-1,3-propanediol, 2,2-diethyl-1,5-pentanediol, 2,4-diethyl-1,5-pentanediol, 3-methyl-1,5-pentanediol, 1,1-dimethyl-1,5-pentanediol, 1,6-hexanediol, 2-ethyl-3-methyl-1,5-hexanediol, 2-ethyl-3-ethyl-1,5-hexanediol, 1,7-heptanediol, 2-ethyl-3-methyl-1,5-heptanediol, 2-ethyl-3-ethyl-1,6-heptanediol, 1,8-octanediol, 1,9-nonanediol, 1,10-decanediol, or a combination thereof, but it is not limited thereto.

In addition, the alicyclic diol may comprise cyclohexanedimethanol (CHDM), isosorbide (isosorbide), 2,2,4,4-tetramethyl-1,3-cyclobutanediol (CBDO), and the like, but it is not limited thereto.

Specifically, the diol component may comprise ethylene glycol, diethylene glycol, neopentyl glycol, and cyclohexanedimethanol, or a combination thereof, but it is not limited thereto.

In the case where a film or a sheet is produced by calendering a polyester resin, which comprises the linear or branched aliphatic diol, it may be excellent in chemical resistance and surface strength since packing is well performed.

In the case where a film or a sheet is prepared by calendering a polyester resin, which comprises an alicyclic diol or an aromatic diol as the diol component, it may be enhanced in impact resistance and thermal resistance since it can be strongly bonded in the chemical structure.

As an example, the diol component may comprise 10 to 90% by mole, 20 to 90% by mole, 30 to 90% by mole, 20 to 85% by mole, 23 to 84% by mole, or 24 to 83% by mole, of a neopentyl glycol or cyclohexanedimethanol based on the total moles of the diol component.

In addition, the polyester resin is obtained by polymerization of a dicarboxylic acid component and a diol component, the dicarboxylic acid component may comprise an aromatic dicarboxylic acid, and the diol component may comprise (i) a branched aliphatic diol or an alicyclic diol and (ii) a linear aliphatic diol.

Specifically, the dicarboxylic acid component may comprise at least one of terephthalic acid and isophthalic acid, and the diol component may comprise (i) at least one of neopentyl glycol and cyclohexanedimethanol and (ii) ethylene glycol.

The polyester resin composition according to an embodiment may further comprise such components as a polymerization catalyst, a stabilizer, and a colorant in addition to the polyester resin and the lubricant.

The polymerization catalyst, stabilizer, and colorant may be added to the product of the esterification reaction or transesterification reaction before the initiation of the polymerization reaction, may be added to a mixed slurry containing a dicarboxylic acid and a diol compound before the esterification reaction, and may be added in the course of the esterification reaction.

The polymerization catalyst may be an antimony-based compound, a titanium-based compound, a germanium-based compound, an aluminum-based compound, or a mixture thereof. Examples of the antimony-based compound include antimony trioxide, antimony acetate, and antimony glycolate. Examples of the titanium-based compound include tetraethyl titanate, tetrapropyl titanate, tetrabutyl titanate, titanium dioxide, and a copolymer of titanium dioxide/silicon dioxide. Examples of the germanium-based compound include germanium dioxide, germanium acetate, and germanium glycolate.

As the stabilizer, a phosphorus-based compound such as phosphoric acid, trimethyl phosphate, and triethyl phosphate may be used. The amount of addition may be 10 to 100 ppm, as the weight of the phosphorus (P) element, based on the weight of the final polymer. If the amount of the stabilizer added is less than 10 ppm, the stabilization effect is insignificant, and the yellowing of the final polymer may occur. If the amount of the stabilizer added exceeds 100 ppm, the activity of the polymerization catalyst is inhibited, which may be disadvantageous in obtaining a polymer having a high polymerization degree.

The colorant is employed to enhance the color of the polymer. The colorant may comprise such a metal salt colorant as cobalt acetate and cobalt propionate and a dye-based colorant. The amount of addition may be 0 to 100 ppm based on the weight of the final polymer.

The polyester resin may have an intrinsic viscosity (IV) of 0.6 to 3.0 dl/g. Specifically, the intrinsic viscosity (IV) of the polyester resin may be 0.6 to 2.5 dl/g, 0.6 to 2.0 dl/g, 0.6 to 1.5 dl/g, 0.6 to 1.0 dl/g, 0.62 to 1.5 dl/g, 0.64 to 1.2 dl/g, or 0.66 to 0.85 dl/g, but it is not limited thereto.

If the polyester resin has an intrinsic viscosity within the above range, it is excellent in the calendering processability, in the retention rate of kinematic viscosity in the calendering process, and in the uniformity of the thickness of a sheet or a film.

### Process for preparing a polyester resin composition

The process for preparing a polyester resin composition comprises (1a) mixing a dicarboxylic acid component and a diol component and carrying out an esterification reaction thereof; (1b) polycondensing the esterification reaction product thus obtained to produce a polyester resin; and (1c) adding a lubricant to the polyester resin to prepare the polyester resin composition.

The dicarboxylic acid component and the diol component used in the esterification reaction in step (1a) are as exemplified above.

Here, it is preferable that 1.05 to 3.0 moles, 1.05 to 2.0 moles, or 1.05 to 1.5 moles of the diol component is mixed with 1 mole of the dicarboxylic acid component. If they are mixed at a ratio within the above range, the esterification reaction is carried out stably, so that sufficient ester oligomers can be advantageously formed.

Meanwhile, it is not preferable to employ an acrylic compound as a raw material for the polyester resin since it may generate unmelted gels.

The polycondensation in step (1b) may be carried out under the conditions of a temperature of 230 to 270°C and a pressure of 0.1 to 3.0 kg/cm². More specifically, the polycondensation may be carried out under the conditions of a temperature of 240 to 295°C and a pressure of 0.2 to 2.9 kg/cm².

The polycondensation may be carried out in the presence of a polycondensation catalyst, a stabilizer, a colorant, a dispersant, an antiblocking agent, an electrostatic agent, an antistatic agent, an antioxidant, a heat stabilizer, a UV blocking agent, a photoinitiator, or any combination thereof well known to those skilled in the art. Such additives may be used within a range that does not impair the effect of the resin composition.

As an example, the polycondensation may be carried out in the presence of a polycondensation catalyst.

The polycondensation catalyst may comprise an alkali metal, an alkaline earth metal, antimony, titanium, manganese, cobalt, cerium, germanium, or any combination thereof, but it is not limited thereto. Preferably, an antimony-based compound may be used as the polycondensation catalyst.

The polycondensation catalyst may be used in an amount of 50 to 1,000 ppm, 50 to 500 ppm, or 50 to 400 ppm, based on the total weight of the polyester resin. If the amount of the polycondensation catalyst is within the above range, the polycondensation reaction rate is accelerated and the side reaction is suppressed, whereby the transparency can be advantageously improved.

As another example, the polycondensation may be carried out in the presence of a stabilizer.

The stabilizer may comprise a phosphorus-based stabilizer. The phosphorus-based stabilizer may comprise phosphoric acid, trimethyl phosphate, triethyl phosphate, triphenyl phosphate, triethyl phosphonoacetate, hindered phenol, or any combination thereof, but it is not limited thereto. The stabilizer may be used in an amount of 3,000 ppm or less, 1 to 2,500 ppm, 1 to 1,500 ppm, or 1 to 1,000 ppm, based on the total weight of the polyester resin.

As still another example, the polycondensation may be carried out in the presence of a colorant.

The colorant may comprise an organic-based colorant, an inorganic-based colorant, a dye, or a combination thereof, but it is not limited thereto. Specifically, the colorant may be cobalt acetate, cobalt propionate, an inorganic-based colorant, or a combination thereof. The colorant may be used in an amount of 1 to 500 ppm, or 1 to 200 ppm, based on the total weight of the polyester resin.

Thereafter, the polyester resin and the lubricant are mixed to prepare a polyester resin composition.

In such event, the type and content of the lubricant added are as exemplified above.

### Process for preparing a polyester film

The process for preparing a polyester film according to an embodiment comprises:
(1) adding a lubricant to a polyester resin to prepare a polyester resin composition;
(2) kneading the composition to gelate it; and
(3) calendering the gelated composition to form a film.

Hereinafter, each step will be described in detail.

In step (1), a lubricant is added to a polyester resin to prepare a polyester resin composition.

The polyester resin used here is obtained by polymerization of a dicarboxylic acid component and a diol component as exemplified above.

Specifically, the dicarboxylic acid component may comprise terephthalic acid, isophthalic acid, naphthalenedicarboxylic acid, cyclohexanedicarboxylic acid, or a combination thereof; and the diol component may comprise ethylene glycol, diethylene glycol, neopentyl glycol, cyclohexanedimethanol, or a combination thereof. In addition, in such event, the diol component may comprise at least one of neopentyl glycol and cyclohexanedimethanol in a total amount of 30 to 90% by mole.

In addition, the content of the lubricant added is 0.1 part by weight to less than 10 parts by weight based on 100 parts by weight of the polyester resin.

The lubricant has a weight reduction rate of 1 to 20% relative to its initial weight when maintained at 150°C for 100 minutes in an isothermal TGA method and a weight reduction rate of 20 to 65% relative to its initial weight when maintained at 200°C for 100 minutes in an isothermal TGA method and a weight reduction rate of 30 to 70% relative to its initial weight when heated at a rate of 20°C/min from 30°C to 350°C in a temperature-elevation type TGA method.

In addition, the lubricant may have a weight reduction rate of 30 to 70% relative to its initial weight when heated at a rate of 20°C/min from 350°C to 500°C.

The type of lubricant is not particularly limited as long as the above thermal properties are satisfied.

For example, the lubricant may comprise at least one, more preferably at least two, selected from the group consisting of a fatty acid, a fatty acid salt, a metal salt of an organic acid, a fatty acid ester, an amide, a hydrocarbon wax, an ester wax, a phosphoric acid ester, a polyolefin wax, a modified polyolefin wax, talc, and an acrylic copolymer, but it is not limited thereto.

Specifically, the lubricant may be at least one selected from the group consisting of stearic acid, palmitic acid, montan wax, Loxiol, PE wax, paraffin wax, cetyl ester, glyceryl distearate, and modified compounds thereof.

The lubricant comprises a combination of a first lubricant and a second lubricant. In such event, the weight ratio of the first lubricant and the second lubricant may range from 1:2 to 2:1.

The first lubricant has a weight reduction rate of 1 to 12% relative to its initial weight when maintained at 150°C for 100 minutes in an isothermal TGA method, and the second lubricant has a weight reduction rate of 10 to 25% relative to its initial weight when maintained at 150°C for 100 minutes in an isothermal TGA method.

A high-speed mixer (for example, a Henshell mixer) may be used to mix the polyester resin and additives. For example, the polyester resin composition may be pelletized, and the pelletized polyester resin composition may be put into a high-speed mixer and mixed for 30 to 300 seconds in a temperature range of 20 to 40°C.

In step (2), the polyester resin composition thus obtained is kneaded and gelated.

The step of kneading the composition to gelate it may comprise at least one selected from the steps: (2a) gelating it using a planetary extruder or a Banbury intensive mixer; (2b) homogenizing it using a mixing roll; and (2c) homogenizing it using a warming roll.

As still another example, steps (2a), (2b), and (2c) may be sequentially carried out in the gelation step.

The temperature conditions in the above step may be in the range of 180 to 230°C for step (2a), in the range of 90 to 130°C for step (2b), and in the range of 90 to 130°C for step (2c), but they are not limited thereto.

In step (3), the composition thus gelated is calendered to form a film.

The calendering step may be carried out using a plurality of calender rolls at a speed of 10 to 120 m/min in a temperature range of 145 to 210°C, but it is not limited thereto.

In addition, this step may further comprise the step of detaching the film from the calender rolls using take-off rolls and adjusting the thickness and smoothness of the film in the course of the calendering. The detaching the film and adjusting the thickness and smoothness of the film may be carried out at a speed of 30 to 120 m/min in a temperature range of 120 to 170°C, but it is not limited thereto.

The calendered film may be further subjected to a surface treatment step.

For example, the surface treatment may be carried out by a method such as embossing treatment.

The embossing treatment refers to a process in which heat and pressure are applied to the surface of a film to form a concave or convex shape.

For example, the embossing process may be carried out in a temperature range of 30 to 90°C using an embossing unit. In such event, the surface treatment speed of the film may be 30 to 120 m/min, but it is not limited thereto.

The surface treatment step may enhance the windability of the film and impart matte properties thereto.

Subsequently, the calendered film is cooled.

If the step of embossing treatment has been carried out, a step of detaching the film from the embossing unit using an annealing roll is carried out in advance.

The detaching of the film may be carried out at a temperature of 5 to 80°C at a speed of 40 to 130 m/min, but it is not limited thereto.

The cooling of the calendered film may be carried out using a cooling roll at a speed of 30 to 120 m/min in a temperature range of -5 to 50°C.

Subsequently, the width of the film thus prepared is cut using a side trimming device, and the thickness of the film thus prepared is measured using a thickness gauge.

Thereafter, the cooled film may be wound up. For example, the cooled film may be wound at a speed of 55 to 95 m/min using a winder, but it is not limited thereto.

### Polyester film

The polyester film prepared by the process according to the embodiment as described above is environmentally friendly and is excellent in surface hardness, optical properties, and thermal resistance.

The film may have a surface hardness of B to HB.

The surface hardness may be measured by an electric pencil hardness tester method. For example, pencils (6B to 9H) supplied by Mitsubishi may be used, and the measurement is performed at the same load (200 g) and the same speed at 45°.

In addition, the polyester film may have a transparency of 30 to 75%, more specifically, 32 to 73%, 33 to 70%, 35 to 70%, 35 to 68%, or 40 to 65%, but it is not limited thereto.

In addition, the polyester film may have a haze of 0 to 20%, more specifically 0 to 15%, 2 to 15%, or 2 to 13%, but it is not limited thereto.

The haze is a measure of transparency and visibility of a film. If the haze of the film satisfies the above range, it means that even if additional lamination such as a printing layer is formed, the optical properties of the film are little deteriorated, whereby the product utility is excellent.

### Embodiments for Carrying Out the Invention

Hereinafter, the present invention will be described in more detail with reference to the following examples. However, these examples are set forth to illustrate the present invention, and the scope of the present invention is not limited thereto.

### Examples 1 to 7 and Comparative Examples 1 to 5

In order to prepare a polyester resin, a 2,500-liter reactor equipped with a stirrer and an outlet condenser was charged with a diol component and a dicarboxylic acid component such that the amount of the final polymer was 2,000 kg. Thereafter, the pressure in the reactor was raised to 2.0 kg/cm² with nitrogen gas, and the temperature of the reactor was elevated to 265°C to carry out the reaction. In such event, the produced water was discharged out of the system to carry out the esterification reaction, and the reaction product was transferred to a polycondensation reactor equipped with a stirrer, a cooling condenser, and a vacuum system.

Antimony triglycolate as a metal-based polycondensation catalyst was added to the esterification reaction product thus obtained in an amount of 300 ppm as the antimony elemental amount, and triethyl phosphate (TEP) as a stabilizer was added in an amount of 500 ppm as the phosphorous elemental amount. Thereafter, while the temperature and pressure inside the reactor were elevated to 285 to 290°C and 50 mmHg, the reaction was carried out under a low vacuum for 40 minutes. Thereafter, the diol component was discharged out of the system, the pressure was gradually reduced to 0.1 mmHg, and then the reaction was carried out under a high vacuum until the maximum power value.

The polyester resin prepared as a result of the polycondensation reaction was discharged and cut into chips. A lubricant was added to the polyester resin to prepare a composition. The composition was extruded at 200°C on average, kneaded for gelation thereof, and calendered to prepare a film having a thickness of 0.2 mm.

In the above preparation process, terephthalic acid (TPA) and/or isophthalic acid (IPA) were used as the dicarboxylic acid component, ethylene glycol (EG), neopentyl glycol (NPG), and/or cyclohexanedimethanol (CHDM) were used as the diol component, and two or more lubricants selected from stearic acid, palmitic acid, montan wax, and Roxyol were used in combination as the lubricant.

In addition, the types and amounts (the mixing ratio in the final composition) of the dicarboxylic acid components, the diol components, and the lubricants are shown in Table 1 below.

### Test Example

The polyester resins, polyester resin compositions, and polyester films prepared in the Examples and Comparative Examples were tested for measuring and evaluating their properties. The results are shown in Table 1 below.

### (1) Intrinsic viscosity (IV)

The polyester resins were each dissolved in ortho-chlorophenol at 100°C, and the intrinsic viscosity (IV) was measured with an Ostwald viscometer at 35°C in a thermostatic bath by measuring the time for the sample to drop.

### (2) Evaluation of the process

While the polyester resins were each subjected to the calendering process, the following were evaluated.
- Sheet formation: whether a sheet was formed well by the calendering process
   ○: good sheet formation, △: intermediate sheet formation, ×: poor sheet formation
- Releasability: whether the sheet did not stick to the processing roll and released well during the process
   ○: good releasability, △: intermediate releasability, ×_{:} poor releasability
- Surface bubbles: whether bubbles were observed on the sheet surface upon completion of the process
   ○: a large number of bubbles, △: intermediate number of bubbles, ×: no bubbles

### (3) Thermal properties of the lubricant

The weight reduction rate of the lubricant relative to its initial weight was measured at 150°C and 200°C in an isothermal TGA method (100-minute delay). The results are shown in Table 1.

In addition, the weight reduction rate of the lubricant relative to its initial weight was measured in the range of 30 to 350°C in a temperature-elevation type TGA method (20°C/min). The results are shown in Table 1.

**[Table 1]**

| | | | Ex. 1 | Ex. 2 | Ex. 3 | | Ex. 4 | | Ex. 5 | | Ex. 6 | Ex. 7 |
|---|---|---|---|---|---|---|---|---|---|---|---|---|
| Dicarboxylic acid | TPA (mole) | | 1 | 1 | 1 | | 1 | | 0.9 | | 0.9 | 1 |
| | IPA (mole) | | - | - | - | | - | | 0.1 | | 0.1 | - |
| Diol | NPG (mole) | | 0.33 | 0.43 | - | | 0.57 | | 0.38 | | 0.38 | - |
| | CHDM (mole) | | - | - | 0.3 | | - | | - | | - | 0.3 |
| | EG (mole) | | 0.67 | 0.57 | 0.7 | | 0.43 | | 0.62 | | 0.62 | 0.7 |
| Resin | IV (dl/g) | | 0.78 | 0.78 | 0.72 | | 0.75 | | 0.75 | | 0.75 | 0.75 |
| Lubricant | A-1 (phr) | | 0.35 | - | 0.9 | | 0.75 | | 0.7 | | - | 0.5 |
| | A-2 (phr) | | - | 0.6 | - | | - | | - | | 1.3 | 0.4 |
| | B-1 (phr) | | 0.38 | 0.8 | - | | 0.7 | | 1.1 | | - | 0.5 |
| | B-2 (phr) | | - | - | 0.6 | | - | | - | | 0.9 | - |
| Weight reduction rate of lubricant (%) | Temp. elevation to 350°C | | 48 | 43 | 60 | | 52 | | 39 | | 59 | 64 |
| | Isothermal at 150°C | | 4.93 | 8.23 | 5.35 | | 5.21 | | 4.27 | | 9.72 | 8.83 |
| | Isothermal at 200°C | | 48.8 | 42.4 | 58.7 | | 52.3 | | 40.3 | | 39.7 | 63.6 |
| Processability | Sheet formation | | ○ | ○ | ○ | | ○ | | ○ | | ○ | ○ |
| | Releasability | | ○ | ○ | ○ | | ○ | | ○ | | ○ | ○ |
| | Surface bubbles | | × | × | × | | × | | × | | × | × |
| | | | | | | | | | | | | |
| | | | | C. Ex. 1 | | C. Ex. 2 | | C. Ex. 3 | | C. Ex. 4 | | C. Ex. 5 |
| Dicarboxylic acid | | TPA (mole) | | 1 | | 1 | | 1 | | 0.9 | | 1 |
| | | IPA (mole) | | - | | - | | - | | 0.1 | | - |
| Diol | | NPG (mole) | | 0.18 | | - | | 0.67 | | 0.38 | | 0.43 |
| | | CHDM (mole) | | - | | 0.3 | | - | | - | | - |
| | | EG (mole) | | 0.82 | | 0.7 | | 0.2 | | 0.62 | | 0.57 |
| Resin | | IV (dl/g) | | 0.68 | | 0.75 | | 0.68 | | 0.75 | | 0.78 |
| Lubricant | | A-1 (phr) | | 0.4 | | 0.8 | | - | | 2 | | 2.3 |
| | | A-2 (phr) | | - | | - | | 0.3 | | - | | - |
| | | B-1 (phr) | | 0.35 | | 0.3 | | 1 | | - | | 1.2 |
| | | B-2 (phr) | | - | | - | | - | | 1.8 | | - |
| Weight reduction rate of lubricant (%) | | Temp. elevation to 350°C | | 53 | | 73 | | 23 | | 53 | | 66 |
| | | Isothermal at 150°C | | 5.32 | | 6.73 | | 8.95 | | 20.66 | | 6.37 |
| | | Isothermal at 200°C | | 53.8 | | 71.9 | | 23.0 | | 52.5 | | 67.2 |
| Processability | | Sheet formation | | x | | △ | | △ | | △ | | △ |
| | | Releasability | | - | | ○ | | × | | × | | ○ |
| | | Surface bubbles | | - | | ○ | | ○ | | ○ | | ○ |

As can be seen from Table 1 above, Examples 1 to 7 using a lubricant having thermal properties (i.e., weight reduction rate with respect to temperature) that comply with the examples were overall excellent in the sheet formation, releasability, and surface bubbles. In contrast, Comparative Examples 2 to 5 using a lubricant having thermal properties that do not comply with the examples were poor in processability; and Comparative Example 1 failed to prepare a sheet since the composition of the polyester resin was not satisfied.

## Claims

1. A polyester resin composition for calendering, which comprises a polyester resin obtained by polymerization of a dicarboxylic acid component and a diol component; and 0.1 part by weight to less than 10 parts by weight of a lubricant based on 100 parts by weight of the polyester resin,
wherein the lubricant has a weight reduction rate of 1 to 20% relative to its initial weight when maintained at 150°C for 100 minutes in an isothermal TGA method and a weight reduction rate of 20 to 65% relative to its initial weight when maintained at 200°C for 100 minutes in an isothermal TGA method and a weight reduction rate of 30 to 70% relative to its initial weight when heated at a rate of 20°C/min from 30°C to 350°C in a temperature-elevation type TGA method;
wherein the lubricant comprises a combination of a first lubricant and a second lubricant; and
wherein the first lubricant has a weight reduction rate of 1 to 12% relative to its initial weight when maintained at 150°C for 100 minutes in an isothermal TGA method; and the second lubricant has a weight reduction rate of 10 to 25% relative to its initial weight when maintained at 150°C for 100 minutes in an isothermal TGA method.

2. The polyester resin composition for calendering of claim 1, wherein the lubricant has a weight reduction rate of 2 to 15% relative to its initial weight when maintained at 150°C for 100 minutes and a weight reduction rate of 25 to 65% relative to its initial weight when maintained at 200°C for 100 minutes.

3. The polyester resin composition for calendering of claim 1, which comprises the lubricant in an amount of 0.1 to 5 parts by weight based on 100 parts by weight of the polyester resin.

4. The polyester resin composition for calendering of claim 1, wherein the weight ratio of the first lubricant and the second lubricant ranges from 1:2 to 2:1.

5. The polyester resin composition for calendering of claim 1, wherein the first lubricant has a weight reduction rate of 20 to 45% relative to its initial weight when maintained at 200°C for 100 minutes, and the second lubricant has a weight reduction rate of 40 to 80% relative to its initial weight when maintained at 200°C for 100 minutes.

6. The polyester resin composition for calendering of claim 1, wherein the dicarboxylic acid component comprises terephthalic acid, isophthalic acid, naphthalenedicarboxylic acid, cyclohexanedicarboxylic acid, or a combination thereof, and the diol component comprises ethylene glycol, diethylene glycol, neopentyl glycol, cyclohexanedimethanol, or a combination thereof.

7. The polyester resin composition for calendering of claim 6, wherein the diol component comprises at least one of neopentyl glycol and cyclohexanedimethanol in a total amount of 30 to 90% by mole.

8. The polyester resin composition for calendering of claim 1, wherein the polyester resin has an intrinsic viscosity (IV) of 0.6 to 1.0 dl/g.

9. A process for preparing a polyester film, which comprises:
(1) adding a lubricant to a polyester resin to prepare a polyester resin composition;
(2) kneading the composition to gelate it; and
(3) calendering the gelated composition to form a film,
wherein the polyester resin is obtained by polymerization of a dicarboxylic acid component and a diol component, the lubricant is employed in an amount of 0.1 part by weight to less than 10 parts by weight based on 100 parts by weight of the polyester resin, and the lubricant has a weight reduction rate of 1 to 20% relative to its initial weight when maintained at 150°C for 100 minutes in an isothermal TGA method and a weight reduction rate of 20 to 65% relative to its initial weight when maintained at 200°C for 100 minutes in an isothermal TGA method and a weight reduction rate of 30 to 70% relative to its initial weight when heated at a rate of 20°C/min from 30°C to 350°C in a temperature-elevation type TGA method;
wherein the lubricant comprises a combination of a first lubricant and a second lubricant; and
wherein the first lubricant has a weight reduction rate of 1 to 12% relative to its initial weight when maintained at 150°C for 100 minutes in an isothermal TGA method; and the second lubricant has a weight reduction rate of 10 to 25% relative to its initial weight when maintained at 150°C for 100 minutes in an isothermal TGA method.

10. The process for preparing a polyester film of claim 9, wherein the lubricant comprises at least one selected from the group consisting of a fatty acid, a fatty acid salt, a metal salt of an organic acid, a fatty acid ester, an amide, a hydrocarbon wax, an ester wax, a phosphoric acid ester, a polyolefin wax, a modified polyolefin wax, talc, and an acrylic copolymer.

11. The process for preparing a polyester film of claim 10, wherein the weight ratio of the first lubricant and the second lubricant ranges from 1:2 to 2:1.

12. The process for preparing a polyester film of claim 9, wherein the dicarboxylic acid component comprises terephthalic acid, isophthalic acid, naphthalenedicarboxylic acid, cyclohexanedicarboxylic acid, or a combination thereof, the diol component comprises ethylene glycol, diethylene glycol, neopentyl glycol, cyclohexanedimethanol, or a combination thereof, and the diol component comprises at least one of neopentyl glycol and cyclohexanedimethanol in a total amount of 30 to 90% by mole.

## Patentansprüche

1. Polyesterharzzusammensetzung zum Kalandrieren, die ein Polyesterharz, das durch Polymerisieren einer Dicarboxylsäurekomponente und einer Diolkomponente erhalten wird; und 0,1 Gewichtsteile bis weniger als 10 Gewichtsteile eines Schmiermittels, basierend auf 100 Gewichtsteilen des Polyesterharzes, umfasst,
wobei das Schmiermittel eine Gewichtsreduktionsrate von 1 bis 20 % entsprechend seines Ausgangsgewichts aufweist, wenn bei 150 °C 100 Minuten lang mit einem isothermischen TGA-Verfahren gehalten, und eine Gewichtsreduktionsrate von 20 bis 65 % entsprechend seines Ausgangsgewichts, wenn bei 200 °C 100 Minuten lang mit einem isothermischen TGA-Verfahren gehalten, und eine Gewichtsreduktionsrate von 30 bis 70 % entsprechend seines Ausgangsgewichts, wenn es bei einer Rate von 20°C/min von 30°C auf 350°C in einem TGA-Verfahren der temperaturerhöhenden Art erhitzt wird;
wobei das Schmiermittel eine Kombination aus einem ersten Schmiermittel und einem zweiten Schmiermittel umfasst; und
wobei das erste Schmiermittel eine Gewichtsreduktionsrate von 1 bis 12 % entsprechend seines Ausgangsgewichts aufweist, wenn bei 150°C 100 Minuten lang mit einem isothermischen TGA-Verfahren gehalten; und das zweite Schmiermittel eine Gewichtsreduktionsrate von 10 bis 25 % entsprechend seines Ausgangsgewichts aufweist, wenn bei 150°C 100 Minuten lang mit einem isothermischen TGA-Verfahren gehalten.

2. Polyesterharzzusammensetzung zum Kalandrieren nach Anspruch1, wobei das Schmiermittel eine Gewichtsreduktionsrate von 2 bis 15 % entsprechend seines Ausgangsgewichts aufweist, wenn bei 150 °C 100 Minuten lang gehalten, und eine Gewichtsreduktionsrate von 25 bis 65 % entsprechend seines Ausgangsgewichts aufweist, wenn bei 200°C 100 Minuten lang gehalten.

3. Polyesterharzzusammensetzung zum Kalandrieren nach Anspruch 1, die das Schmiermittel in einer Menge von 0,1 bis 5 Gewichtsteilen, basierend auf 100 Gewichtsteilen des Polyesterharzes, umfasst.

4. Polyesterharzzusammensetzung zum Kalandrieren nach Anspruch 1, wobei das Gewichtsverhältnis des ersten Schmiermittels und des zweiten Schmiermittels im Bereich von 1:2 bis 2:1 liegt.

5. Polyesterharzzusammensetzung zum Kalandrieren nach Anspruch 1, wobei das erste Schmiermittel eine Gewichtsreduktionsrate von 20 bis 45 % entsprechend seines Ausgangsgewichts aufweist, wenn bei 200°C 100 Minuten lang gehalten, und das zweite Schmiermittel eine Gewichtsreduktionsrate von 40 bis 80 % entsprechend seines Ausgangsgewichts aufweist, wenn bei 200°C 100 Minuten lang gehalten.

6. Polyesterharzzusammensetzung zum Kalandrieren nach Anspruch 1, wobei die Dicarboxylsäurekomponente Terephtalsäure, Isophthalsäure, Naphthalendicarboxylsäure, Cyclohexandicarboxylsäure oder eine Kombination davon umfasst und wobei die Diolkomponente Ethylenglycol, Diethylenglycol, Neopentylglycol, Cyclohexandimethanol oder eine Kombination davon umfasst.

7. Polyesterharzzusammensetzung zum Kalandrieren nach Anspruch 6, wobei die Diolkomponente mindestens eines von Neopentylglycol und Cyclohexandimethanol in einer Gesamtmenge von 30 bis 90 Mol-% umfasst.

8. Polyesterharzzusammensetzung zum Kalandrieren nach Anspruch 1, wobei das Polyesterharz eine intrinsische Viskosität (IV) von 0,6 bis 1,0 dl/g aufweist.

9. Prozess zum Herstellen einer Polyesterfolie, der Folgendes umfasst:
(1) Hinzufügen eines Schmiermittels zu einem Polyesterharz, um eine Polyesterharzzusammensetzung herzustellen;
(2) Kneten der Zusammensetzung, um diese zu gelieren; und
(3) Kalandrieren der gelierten Zusammensetzung, um eine Folie zu bilden,
wobei das Polyesterharz durch Polymerisieren einer Dicarboxylsäurekomponente und einer Diolkomponente erhalten wird, wobei das Schmiermittel in einer Menge von 0,1 Gewichtsteilen bis weniger als 10 Gewichtsteilen, basierend auf 100 Gewichtsteilen des Polyesterharzes eingesetzt wird und das Schmiermittel eine Gewichtsreduktionsrate von 1 bis 20 % entsprechend seines Ausgangsgewichts aufweist, wenn bei 150 °C 100 Minuten lang mit einem isothermischen TGA-Verfahren gehalten, und eine Gewichtsreduktionsrate von 20 bis 65 % entsprechend seines Ausgangsgewichts, wenn bei 200 °C 100 Minuten lang mit einem isothermischen TGA-Verfahren gehalten, und eine Gewichtsreduktionsrate von 30 bis 70 % entsprechend seines Ausgangsgewichts, wenn es bei eine Rate von 20 °C/min von 30 °C auf 350 °C in einem TGA-Verfahren der temperaturerhöhenden Art erhitzt wird;
wobei das Schmiermittel eine Kombination aus einem ersten Schmiermittel und einem zweiten Schmiermittel umfasst; und
wobei das erste Schmiermittel eine Gewichtsreduktionsrate von 1 bis 12 % entsprechend seines Ausgangsgewichts aufweist, wenn bei 150°C 100 Minuten lang mit einem isothermischen TGA-Verfahren gehalten; und das zweite Schmiermittel eine Gewichtsreduktionsrate von 10 bis 25 % entsprechend seines Ausgangsgewichts aufweist, wenn bei 150°C 100 Minuten lang mit einem isothermischen TGA-Verfahren gehalten.

10. Prozess zum Herstellen einer Polyesterfolie nach Anspruch 9, wobei das Schmiermittel mindestens eine der Folgenden umfasst, die ausgewählt ist aus der Gruppe bestehend aus einer Fettsäure, einem Fettsäuresalz, einem Metallsalz von einer organischen Säure, einem Fettsäureester, einem Amid, einem Kohlenwasserstoffwachs, einem modifizierten Polyolefinwachs, Talkum und einem Acrylcopolymer.

11. Prozess zum Herstellen einer Polyesterfolie nach Anspruch 10, wobei das Gewichtsverhältnis des ersten Schmiermittels und des zweiten Schmiermittels in Bereichen von 1:2 bis 2:1 liegt.

12. Prozess zum Herstellen einer Polyesterfolie nach Anspruch 9, wobei die Dicarboxylsäurekomponente Terephtalsäure, Isophthalsäure, Naphthalendicarboxylsäure, Cyclohexandicarboxylsäure oder eine Kombination davon umfasst, wobei die Diolkomponente Ethylenglycol, Diethylenglycol, Neopentylglycol, Cyclohexandimethanol oder eine Kombination davon umfasst und wobei die Diolkomponente mindestens eines von Neopentylglycol und Cyclohexandimethanol in einer Gesamtmenge von 30 bis 90 Mol-% umfasst.

## Revendications

1. Composition de résine polyester pour calandrage, qui comprend une résine polyester obtenue par polymérisation d'un composant acide dicarboxylique et d'un composant diol ; et de 0,1 partie en poids à moins de 10 parties en poids d'un lubrifiant sur la base de 100 parties en poids de la résine polyester,
dans laquelle le lubrifiant présente un taux de réduction de poids allant de 1 à 20 % par rapport à son poids initial lorsqu'il est maintenu à 150°C pendant 100 minutes dans un procédé de TGA isothermique et un taux de réduction de poids allant de 20 à 65 % par rapport à son poids initial lorsqu'il est maintenu à 200 °C pendant 100 minutes dans un procédé de TGA isothermique et un taux de réduction de poids allant de 30 à 70 % par rapport à son poids initial lorsqu'il est chauffé à une vitesse de 20°C/min. de 30 °C à 350 °C dans un procédé de TGA de type élévation de température ;
dans laquelle le lubrifiant comprend une combinaison d'un premier lubrifiant et d'un second lubrifiant ; et
dans laquelle le premier lubrifiant présente un taux de réduction de poids allant de 1 à 12% par rapport à son poids initial lorsqu'il est maintenu à 150°C pendant 100 minutes dans un procédé de TGA isothermique ; et le second lubrifiant présente un taux de réduction de poids allant de 10 à 25 % par rapport à son poids initial lorsqu'il est maintenu à 150 °C pendant 100 minutes dans un procédé de TGA isothermique.

2. Composition de résine polyester pour calandrage selon la revendication 1, dans laquelle le lubrifiant présente un taux de réduction de poids allant de 2 à 15% par rapport à son poids initial lorsqu'il est maintenu à 150°C pendant 100 minutes et un taux de réduction de poids allant de 25 à 65 % par rapport à son poids initial lorsqu'il est maintenu à 200 °C pendant 100 minutes.

3. Composition de résine polyester pour calandrage selon la revendication 1, qui comprend le lubrifiant en une quantité allant de 0,1 à 5 parties en poids sur la base de 100 parties en poids de résine polyester.

4. Composition de résine polyester pour calandrage selon la revendication 1, dans laquelle le rapport en poids du premier lubrifiant et du second lubrifiant se situe dans la plage allant de 1/2 à 2/1.

5. Composition de résine polyester pour calandrage selon la revendication 1, dans laquelle le premier lubrifiant présente un taux de réduction de poids allant de 20 à 45 % par rapport à son poids initial lorsqu'il est maintenu à 200 °C pendant 100 minutes, et le second lubrifiant présente un taux de réduction de poids allant de 40 à 80 % par rapport à son poids initial lorsqu'il est maintenu à 200 °C pendant 100 minutes.

6. Composition de résine polyester pour calandrage selon la revendication 1, dans laquelle le composant acide dicarboxylique comprend de l'acide téréphtalique, de l'acide isophtalique, de l'acide naphtalènedicarboxylique, de l'acide cyclohexanedicarboxylique ou une combinaison de ceux-ci, et le composant diol comprend de l'éthylène glycol, du diéthylène glycol, du néopentylglycol, du cyclohexanediméthanol ou une combinaison de ceux-ci.

7. Composition de résine polyester pour calandrage selon la revendication 6, dans laquelle le composant diol comprend au moins un élément parmi le néopentylglycol et le cyclohexanediméthanol en une quantité totale allant de 30 à 90 % en moles.

8. Composition de résine polyester pour calandrage selon la revendication 1, dans laquelle la résine polyester présente une viscosité intrinsèque (IV) allant de 0,6 à 1,0 dl/g.

9. Méthode de préparation d'un film polyester, qui comprend :
(1) l'ajout d'un lubrifiant à une résine polyester pour préparer une composition de résine polyester ;
(2) le malaxage de la composition pour la gélifier ; et
(3) le calandrage de la composition gélifiée pour former un film,
dans laquelle la résine polyester est obtenue par polymérisation d'un composant acide dicarboxylique et d'un composant diol, le lubrifiant est utilisé en une quantité allant de 0,1 partie en poids à moins de 10 parties en poids sur la base de 100 parties en poids de la résine polyester, et le lubrifiant présente un taux de réduction de poids allant de 1 à 20 % par rapport à son poids initial lorsqu'il est maintenu à 150°C pendant 100 minutes dans un procédé de TGA isothermique et un taux de réduction de poids allant de 20 à 65 % par rapport à son poids initial lorsqu'il est maintenu à 200 °C pendant 100 minutes dans un procédé de TGA isothermique et un taux de réduction de poids allant de 30 à 70% par rapport à son poids initial lorsqu'il est chauffé à une vitesse de 20 °C/min. de 30 °C à 350 °C dans un procédé de TGA de type élévation de température ;
dans laquelle le lubrifiant comprend une combinaison d'un premier lubrifiant et d'un second lubrifiant ; et
dans laquelle le premier lubrifiant présente un taux de réduction de poids allant de 1 à 12% par rapport à son poids initial lorsqu'il est maintenu à 150°C pendant 100 minutes dans un procédé de TGA isothermique ; et le second lubrifiant présente un taux de réduction de poids allant de 10 à 25 % par rapport à son poids initial lorsqu'il est maintenu à 150°C pendant 100 minutes dans un procédé de TGA isothermique.

10. Méthode de préparation d'un film polyester selon la revendication 9, dans laquelle le lubrifiant comprend au moins un élément choisi parmi le groupe consistant en un acide gras, un sel d'acide gras, un sel métallique d'un acide organique, un ester d'acide gras, un amide, une cire d'hydrocarbure, une cire d'ester, un ester d'acide phosphorique, une cire de polyoléfine, une cire de polyoléfine modifiée, du talc, et un copolymère acrylique.

11. Méthode de préparation d'un film polyester selon la revendication 10, dans laquelle le rapport en poids du premier lubrifiant et du second lubrifiant se situe dans la plage allant de 1/2 à 2/1.

12. Méthode de préparation d'un film polyester selon la revendication 9, dans laquelle le composant acide dicarboxylique comprend de l'acide téréphtalique, de l'acide isophtalique, de l'acide naphtalènedicarboxylique, de l'acide cyclohexanedicarboxylique ou une combinaison de ceux-ci, et le composant diol comprend de l'éthylène glycol, du diéthylène glycol, du néopentylglycol, du cyclohexanediméthanol ou une combinaison de ceux-ci, et le composant diol comprend au moins un élément parmi le néopentylglycol et le cyclohexanediméthanol en une quantité totale allant de 30 à 90 % en moles.
